# EUROPEAN PATENT APPLICATION

(11) **EP 1 498 163 A1**
(43) Date of publication of application: **19.01.2005**
(21) Application number: 03016104.6
(22) Date of filing: 16.07.2003
(51) Int. Cl.: A63F 13/02, G06F 3/033

(54) **Device for game control using voice recognition**

(71) Applicant: Huang, Hsien-Ta, Ping Jenn City, Taoyuan (TW)
(72) Inventor: Huang, Hsien-Ta, Ping Jenn City, Taoyuan (TW)
(74) Representative: Casalonga, Axel

(57) **Abstract**

The invention is related to a monotone voice activation device. The invention uses a microphone or a speaker to receive and retrieve voice signal. Through an analog/digital press-button simulative conversion circuit, voice signal is transformed into an analog/digital press-button signal, which is recognizable by a TV game controller that can send the game console a single or macro operational command preset on operator's needs.

## Description

### Field of the Invention

The present invention is related to a monotone voice activation control device. Especially, it means a monotone voice activation control device that can be used for TV game console or computer game to partially replace user-operated command, so in addition to traditional manual operation, it offers an alternative to use voice to control at least one action and replace part of manually operated commands.

### Background of the Invention

With the development of electronic products, innovation is continuously made to game software and equipment. Increasing difficulty and challenge is given to game player. All game lovers know this will actually increase the feeling of accomplishment. However, it is necessary to improve game player's skills to cope with increasing challenge. Usually, the first thing to improve is that two hands are not sufficient to handle a game. This is evident that timely response is needed when both hands work on many press-buttons at the same time to apply special skills or activate special game effect. Presently, the best way to improve this situation is to use the operator's basic instinct to control the game and change command instantly.

Although present game control stays with manual operation technology, there are some people proposing "voice recognition module for game control". The voice control module is to use a voice recognition device to convert microphone input voice signal to a game control command through a monotone voice recognition model or use a continuous voice recognition device to convert microphone input voice signal to a game control command through a continuous voice recognition model. When the continuous voice recognition device identifies the command, it will activate the monotone voice activation device to convert the microphone input voice signal into corresponding operation command to control the game.

Nevertheless, after thorough research and analysis on the above technology, the inventor thought current voice recognition system handles thousands of languages (thousands of languages in the world, same pronunciation for different words exists in each single language). It is believed that voice recognition system should be built with thinking and comprehension ability. This is the same as human brain that only under education can precisely hear and identify voice. Different words with same pronunciation can confuse even human brain. It is inevitable for voice recognition to make false recognition.

Furthermore, current computer system cannot handle some signal data. It is even impossible to interpret voice signal. Hence, the above-mentioned current voice recognition system is not a viable technology. It is even impossible to become widespreading. Maybe a few years later, when IC technology is advanced and voice specification is set, we will start to see some progress. Practically, in market or R&D field, there is no such function. Therefore, the invention based on the above technology only uses conditional concept of invention for patent application.

Technically, the above-mentioned case needs highly advanced technology and extremely high precision standard to fulfill precision, practical applicability and capability of recognizing thousands of languages. First, there must be very unique recognition module and IC. Even this may be achieved in several decades later, the development cost is so high that only government owned business identity could afford with respect to technical capability and resources. Moreover, a great deal of uncertainty exists in this lengthy development process.

For game products, body movement based interaction involved in game control brings in the major entertaining effect. Sometimes the entertaining effect is enhanced by combining game with the environment, facility and sports. For examples, electric guitar and dancing blanket etc. The above case of voice recognition product is against the entertaining spirit of game product. If body movement is completely given up, the entertaining effect on game playing will be completely lost. Nobody will like this product. It is hard to image the player's feeling about such voice-operated game that is usually played for few hours.

Particularly, the above case for voice recognition module has a clear delay due to signal conversion, it certainly is a negative factor to the entertaining effect. In a real game world, it is a competition for speed, accuracy, strength and control. The above case has the problem with time lag. It is even slower than a beginner's speed for using press-button. It is really not necessary to wait for recognition to complete prior to take action.

Thus, the above-mentioned voice recognition system is nothing but a concept. It does not exist in market or even in science field.

### Summary of the Invention

In view of the practical shortcomings for the above-mentioned voice recognition system, the inventor for the present invention has made improvement and came up with this invention.

The objective for the present invention is to provide a monotone voice activation control for game playing. It is similar to human response to stimulus through interaction between brains, neural system and body reaction. For example, in a game when a right hand finger is operating A button, an immediate need of operating B button or other buttons to change actions is fulfilled by reflection A→thinking B→ decision making B → neural transmission B for necessary action. For a normal people, it takes at least 0.3 ∼0.5 second. But if the game control is complicated or operation is slow, it may take as long as 1∼2 seconds. If this action can be activated by voice command, it will be very convenient and quick.

Thus, the main objective of the present invention is to provide a microphone or a speaker to receive and retrieve voice signal. Through an analog/digital press-button simulative conversion circuit, voice signal is transformed into an analog/digital press-button signal, which is recognizable to a TV game controller that can send the game console a single or macro operational command preset on operator's needs. Therefore, a special game effect can be achieved.

Since the monotone voice activation control command comes from the operator's basic instinct, it meets the operator's needs in convenience, quickness, effectiveness, zero lag and low cost. This is not a complicated voice recognition system (recognition process is lengthy and against the spirit of game entertainment). Now such a monotone voice recognition technology is viable technically, economically and practically. It meets the requirements of convenience, quickness, effectiveness, zero lag and low cost.

### Brief Description of the Drawings

Figure 1 illustrates that the invention is adopted in a game console.
Figure 2 is a block diagram for the signal identification circuit for game control in the present invention.
Figure 3 is a block diagram for the voice signal processing and identification circuit in the present invention.

### Detailed Description of the Invention

As to the detailed embodiment, application principle, function and effect, please refer to the description for attached figures :

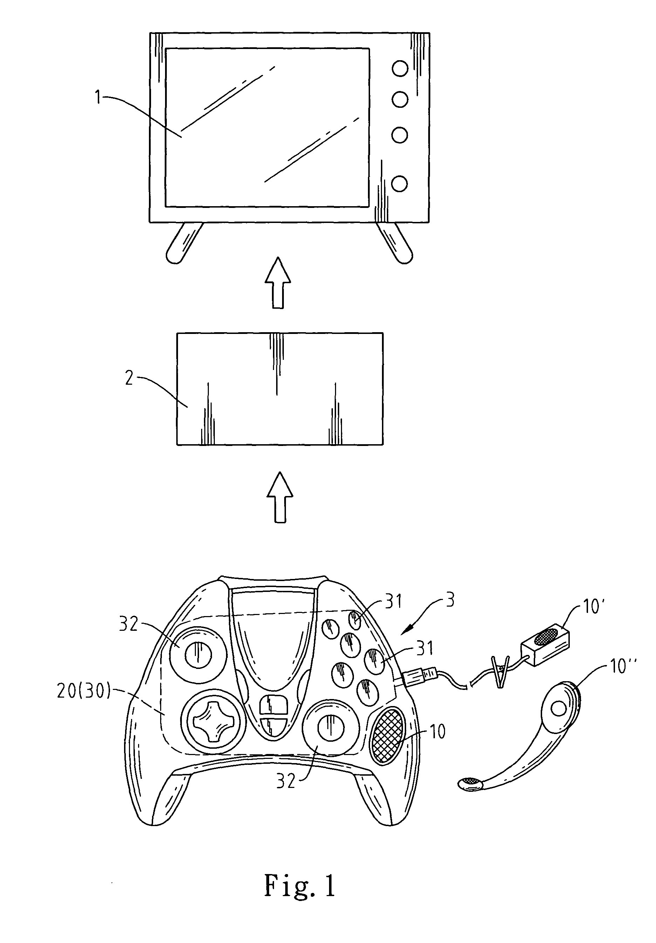

Please refer to Figure 1. The monotone voice activation control device comprises a TV screen 1, a game console 2 and a controller 3. The TV screen 1 is to display the game picture and sound effect. The game console 2 is used as a platform to play and control the game. The controller 3 is to produce directional movement, press-buttons or control messages for special game effects.

The game controller 3 may comprise press-buttons 31 or both press-buttons 31 and control stick 32. Based on actions required in a game, control signals or actions are added. However, due to limit of human responsive capability and complicated control actions, control is not easily made. With voice activated operation on special effects, it offers solutions for the problem with failure to handle many actions simultaneously.

This monotone voice activation control circuit is installed in the controller 3. It contains game control signal recognition circuit 20 or voice signal processing and recognition circuit 30. The monotone voice activation control circuit is to convert the input voice into recognizable game signal for the game console 2 to control the game. Besides, the controller 3 has a microphone 10, which can receive operator's voice command to activate built-in the monotone voice activation control circuit. The microphone 10 can be a clamping microphone 10', which can be attached to collar and clearly receive the operator's voice command. Or the microphone 10 can be over-the-ear microphone 10" to provide voice activation control effect. No matter it is the normal microphone 10, the clamping microphone 10' or the over-the-ear microphone 10", the user can pick the model, wireless or wire. Further, the microphone can be used as speaker too.

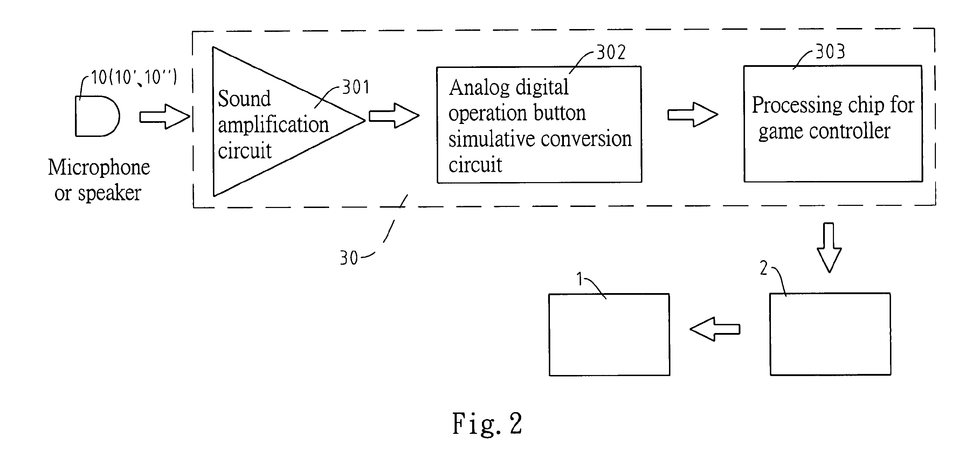

Please refer to Figure 1 and Figure 2. The block diagram is a voice signal processing and recognition circuit 30 that contains a sound amplification circuit 301, analog/digital operation press-button simulative conversion circuit 302 and game control processing chip 303. The microphone 10 (clamping microphone 10' and over-the-ear microphone 10") receives the input voice signal, which is amplified by the sound amplification circuit 301. The signal is further processed by the analog/digital operation press-button simulative conversion circuit 302 into a recognizable analog/digital operation press-button simulative signal. Then, the game control processing chip 303 converts the input control signals from the press-button 31 and control stick 31 into recognizable signals to the game console 2.

In operation, at first it needs to preset the necessary operation mode for a press-button 31 in accordance with the special functions for each game design and map to the related press-button 31 to voice activation control. Once the game starts, the voice to activate the press-button 31 with special function is given to drive the analog/digital operation press-button simulative conversion circuit 302. So the signal becomes recognizable to the game control chip, which then sends off signal to the game console 2 to control the game playing.

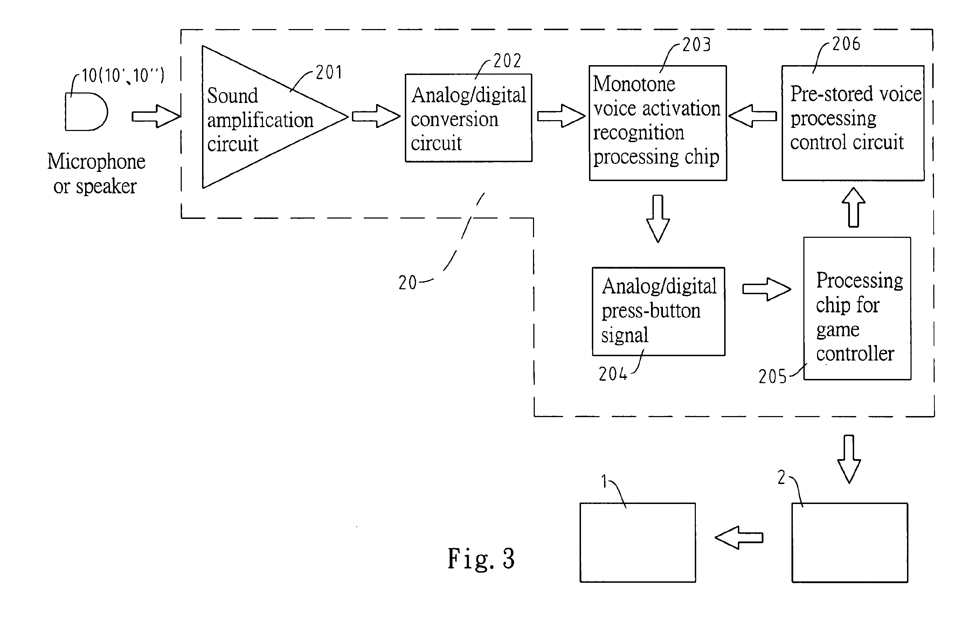

Please refer to Figure 1 and Figure 3. Another monotone voice activation control device in the present invention contains a TV screen 1, a game console 2 and a controller 3. The TV screen 1 is to display the game picture and sound effect. The game console 2 is used as a platform to play and control the game. The controller 3 is to produce directional movement, press-buttons or control messages for special game effects.

The game control signal recognition circuit 20 comprises a microphone 10 (clamping microphone 10' or over-the-ear microphone 10"), sound amplification circuit 201, analog→digital conversion circuit 202, monotone voice recognition and processing chip 203, analog/digital press-button signal 204, game control processing chip 205 and pre-stored voice processing control circuit 206.

At the beginning, more than one monotone voice commands are pre-stored in accordance with game operation and press-button 31 position. The pre-stored voice command corresponds to the related press-button 31. When there is a need of special function in the game, the monotone voice ever pre-stored can be given off through microphone 10 reception (or speaker) to activate the built-in control circuit and use sound amplification circuit 201 to amplify the microphone-retrieved voice. Followed by conversion of voice signal into recognizable analog/digital simulative signal by analog to digital conversion circuit 202. The monotone voice activation recognition and processing chip 203 is used to process the input voice. The pre-stored voice processing control circuit 206 is used to process the pre-stored voice. When the correct voice signal is obtained, the analog/digital press-button signal 204 transmits the action command to the processing chip 205 in game controller. The pre-stored single or continuous macro command in the press-button 31 is sent to the game console 2 for game playing.

Thus, a press-button 31 on the controller 3 can be set for several continuous game actions. Each action is represented by a monotone voice command. When 3∼5 monotone voice commands are given, the controller 3 will execute the received commands. If non-continuous monotone voice commands are given, the actions are responded in a non-continuous manner.

The advantages and practical value for the present invention are as follows:
1. With the monotone voice recognition technology, the user can select rhymes that have large difference (for example: ha, hai, sha, pon...etc, or such as A, B, G, X, Y...etc.) to assign monotone commands in accordance with multi-button operation requirement converted into game program signals that simulate the necessary multi-button operation and achieve the same game effect. One monotone voice can replace a simultaneous multi-button operation or achieve continuous quick actions by pressing buttons several times. This certainly provides a solution to the problem with inconvenience or rough operation process or inexperienced operation due to failure to handle by only two hands. This is also to meet high skill and high efficiency control requirement in game playing. Different monotone gives different command accurately and effectively.
2. Monotone voice activation is used like the third hand for operating command in a highly efficient and distinguishable way. It also greatly increases entertaining effect in operation. Especially when the game is playing against an opponent, the commands for special skills or weapons can be operated in a confidential way by selected monotone voice commands. Some unexpected effects can be made through unique voice or sign language for conducting the operation. It also gives a strategic winning effect.
3. Since monotone voice command is used, IC design is facilitated to increase additional action combinations to original default function. The user can self-determine the setup for secret skills or continuous actions or powerful weapons. This new capability and effectiveness present in game playing is the key breakthrough for attracting new business opportunity.
4. Since monotone voice action can avoid common voice recognition problems and high false judgment, or overtime to violate game rules. Monotone voice activation is relatively simple, accurate and quick method. Because of monotone voice activation, the cost is economic enough to benefit general public. Also because of the monotone activation, there is no trouble with mistaken judgment for multiple word pronunciations. The development for game peripherals becomes easier than before. Users benefit from more capability to control game playing.
5. The invention makes the game player feel like having an extra hand. The control becomes easier, faster, more accurate and more efficient. Winning the opponent to gain feeling of accomplishment has never been easier than now. More particularly, this innovative operation greatly increases entertainment value and fun with enhanced game player's feeling of superiority and product grade.
6. The application scope for the present invention also covers up to current brand name game software products that were limited by human physical condition and failed to make breakthrough. The present invention allows software companies to develop more challenging, more entertaining, more high-tech and more functional games. It increases business opportunities. There is no more worry about the loss of interest and purchasing motive by the game player due to poor controllability. The present invention makes the game player feel like having an extra hand and behave like a high-tech pro. This invention really brings the game world into a new high-tech era.

The following is the explanation for the invention in practical use. It is believed that the examiners will get a thorough understanding through this.

Example 1: Fighting game usually has built-in secret skills. But it requires the player to complete several press-buttons in sequence or simultaneously within certain time (usually 0.5∼1 second) to comply with the existing program configuration, it is then considered as correct command. Thus, the button-pressing sequence for secret skills can be converted into a monotone voice signal that is easily called up during game playing. This prevents the player from troubles and also offers fast command and entertaining effect.

Example 2: In games like car racing or motorcycle racing, usually the player uses left hand to control steering wheel and right hand for acceleration or deceleration. Besides, the player can perform shooting, lightning strike, laser weapon, canon and all kinds of attacks to destroy the opponent's offense. The monotone voice activation control can help the player easily develop all kinds of game skills (either single button or multiple button control, it can be set as monotone voice activation command.)

Example 3: In an aviation fighting game (like STAR WARS ) the player also uses left hand for direction control, descending and ascending and right hand for fighting. But some powerful weapons, like laser canon, need complicated operation procedures. This creates an awkward situation. Monotone voice activated command provides a solution for this.

Example 4: In a simple aviation fighting game, the player uses left hand for direction control, descending and ascending and right hand for single shooting, continuous shooting and special laser canon. Before game is started, laser canon is preset for voice activation, so it can be easily operated in a game for single shooting or continuous shooting. When enemy airplanes offend in a group, it only takes one command to activate laser canon to eliminate all enemy planes. The player does not need to go through thinking→decision making → neutral transmission → taking action, so there is no waste of time. Besides, within a very short time, it is expected that the player can win over the opponent.

From the above, it is very evident that besides body movement voice activation control during game playing offers convenience, high winning rate, feeling of accomplishment and entertaining effect. The invention enhances the control ability for the player to win all the games. More importantly, technically monotone voice activated command can avoid false judgment or lag due to language complication, which used to make the player a frequent loser.

## Claims

1. A monotone activated control device that installs a game control circuit, a game control signal recognition circuit, which is activated by voice signal instead of controller press-button ;
the game control signal recognition circuit comprises a microphone, a sound amplification circuit, analog/digital operation press-button simulative conversion circuit and game control processing chip. The microphone receives and retrieves voice signal, which is then converted through an analog/ digital press-button simulative conversion circuit device into an analog/digital press-button signal, which is recognizable to a game controller that can send the game console a single or macro operational command preset on operator's needs. Therefore, a special game effect can be achieved.

2. The monotone voice activation control device as claimed in claim 1, the controller has a game control circuit, which is further a voice signal processing recognition circuit, comprising a microphone, a sound amplification circuit, analog →digital conversion circuit, a monotone voice activation processing chip, an analog/digital press-button signal, a processing chip for game controller and a pre-stored voice processing control circuit. The microphone receives the voice command sent by the operator to activate built-in control circuit and uses a sound amplification circuit to amplify the retrieved sound signal. Then it uses analog→digital conversion circuit to convert the voice signal into recognizable analog/digital simulative signal. The monotone voice activation recognition and processing chip will recognize and process the input voice and pre-stored voice. When the accurate voice signal is obtained, analog/digital press-button signal transmits the action command to the processing chip in the game console. The preset single command or macro for continuous actions will be sent to the game console to execute the command.

3. The monotone voice activation control device as claimed in claim 1, the microphone is a clamping microphone.

4. The monotone voice activation control device as claimed in claim 2, the microphone is a clamping microphone.

5. The monotone voice activation control device as claimed in claim 1, the microphone is a over-the-ear microphone.

6. The monotone voice activation control device as claimed in claim 2, the microphone is a over-the-ear microphone.
